# EUROPEAN PATENT SPECIFICATION

(11) **EP 1 646 905 B1**
(45) Date of publication and mention of the grant of the patent: **01.09.2021**
(21) Application number: 04743526.8
(22) Date of filing: 22.07.2004
(51) Int. Cl.: G02B 26/08, G02B 7/182

(54) **OPTICAL ELEMENT POSITIONING DEVICES**
EINRICHTUNG ZUR POSITIONIERUNG EINES OPTISCHEN ELEMENTS
DISPOSITIFS DE POSITIONNEMENT D'ELEMENT OPTIQUE

(30) Priority: 22.07.2003 GB 0317105; 22.07.2003 GB 0317104; 27.03.2004 GB 0406991; 29.05.2004 GB 0412157
(43) Date of publication of application: 19.04.2006
(73) Proprietor: Polatis Ltd, Cambridge CB4 0FW (GB)
(72) Inventor: DAMES, Andrew, Nicholas, Cambridge CB4 1HU (GB)
(74) Representative: ip21 Ltd
(86) International application number: PCT/GB2004/003194
(87) International publication number: WO 2005/012977

(56) References cited:
- WO-A-98/47035
- WO-A1-99/08330
- US-A- 4 660 941
- US-A- 5 159 225
- US-A- 5 159 225
- US-A- 6 059 250

## Description

### Field of the Invention

The invention relates to optical positioning systems and laser marking systems.

### Background to the Invention and Prior Art known to the Applicant(s)

The closest prior art known to the applicant(s) is that disclosed in their own prior published patent applications, for example, in international patent application published as WO01/50176 which deals primarily with optical switch components. Another close prior art is that disclosed in PCT application WO 98/47035 A which discloses a laser beam moving system comprising a transmission structure and a set of hinges.

A number of improvements to the structure disclosed in the applicant's prior published applications are introduced in the section entitled 'Summary of the Invention'.

Another relevant piece of prior art is shown in DE3833260 (Jenoptik Jena) which shows a mirror element mounted on two piezoelectric bending strips joined by a single flexure element at one extremity and held apart at the other extremity to form a triangular support structure. Whilst this system may have the reliability of piezoelectric bending strips, it is particularly bulky in overall structure.

The invention is thought to have particular applications in the field of laser marking where traditionally a series of galvanometers would be used to direct the light to specified regions on a substrate. Overall, galvanometers are power hungry and bulky components. In many applications where ink jet print heads are used do not have much space at the marking point, and would not permit the use of conventional galvanometer-based scan heads due to lack of space.

### Summary of the Invention

In a first broad independent aspect, the invention provides an optical element positioning arrangement according to claim 1. This configuration is advantageous because it provides the system with greater mechanical stability as compared to systems with a single monolithic actuator. This system is also particularly advantageous because it avoids having to use galvanometers and allows the production of devices which are less power hungry when scanning fast. The inventive structure may also achieve greater bandwidths. The inventive configuration may also be more compact than the prior art systems.

This is beneficial in terms of overall stability but particularly in terms of achievable tilt angles.

This structure achieves a particularly balanced system mechanically which are potentially coupled with the advantages listed with regard to the first and second aspects above.

In a subsidiary aspect, the actuators are of rectangular cross-section. This structure is also thought to achieve useful mechanical properties. The actuation of this structure is particularly advantageous in terms of its repeatability.

In a subsidiary aspect, the arrangement incorporates a display unit and the optical element projects a beam on to the display unit. This structure is particularly advantageous when used in mobile phone technology or other applications using relatively small display screens.

These features mark a radical departure from the current prior art teaching in laser marking systems where galvanometers usually are used to displace mirrors, there being provided two galvanometers and mirror assemblies in a series. The features of this broad aspect will achieve high repeatability, reliability and compactness of the system. It may also be less power hungry than other prior art systems.

The optical element may direct light onto a divergent lens located between the substrate to be marked and the optical element. This configuration is particularly advantageous because it will allow an increased number of resolvable pixels to be achieved in a particular scanner field, by both increasing the scan angle and correcting for the overly near focus point typically obtained when using a 1550 nm optimised collimator at a shorter wavelength, either visible, or 1090 nm from a high power fibre laser.

The optical element may direct light onto a convergent lens located between the substrate to be marked and the optical element. This structure is particularly advantageous because it achieves a parallel scanned beam (or a telecentric system), such that the font size is independent of target distance.

The laser marking system may comprise a post-spot camera for monitoring the marking and means for comparing the values obtained by the camera with pre-determined levels and adjusting the marking parameters if necessary. This system is particularly beneficial in terms of achieving better marking results.

The laser marking system may comprise a photo-detector said to monitor the marking. This allows greater quality to be achieved. In a further subsidiary aspect, the laser marking system comprises means for measuring the marking distance and adjusting the marking parameters of the system in accordance with distance. One of the advantages of this structure is to achieve more consistent marking throughout the marking process. In a further subsidiary aspect, the laser marking system comprises means for measuring the relative values of combustion light and beam power. This structure will allow increased accuracy and consistency to be obtained through the marking process.

In a further subsidiary aspect, the laser marking system comprises an arrangement of any of the preceding broad independent aspects.

In a further subsidiary aspect, the actuator incorporates no galvanometer. This feature does away with the drawbacks of galvanometers which are bulky and are generally power hungry.

In a further subsidiary aspect, the actuator is a monolithic 2D actuator. This allows the system to be particularly compact when compared to the prior art.

In a further subsidiary aspect, the actuator is connected to the optical element via a flexure. This is particularly useful in terms of inherent flexibility of the system which is necessary to achieve high levels of repeatability.

In a further subsidiary aspect, the laser marking system comprises a first optical element positioning arrangement using piezoelectric actuation to displace a first optical element in a first one dimensional direction and a second optical element positioning arrangement using piezoelectric actuation to displace a second optical element in a second one dimensional direction, the first and the second arrangement being arranged in series. This allows the laser marking system, built according to this aspect, to have the layout of a traditional two stage galvanometer system without the drawbacks of galvanometers.

In a further subsidiary aspect, the laser marking system comprises an optical element positioning arrangement using piezoelectric actuators for displacing the element in two dimensions. This structure achieves high repeatability and can be made relatively compact.

In a further subsidiary aspect, the actuator is a thermo-electric actuator.

In a further subsidiary aspect, the laser marking system comprises means for changing scanning speed in order to provide gaps in between characters.

In a further subsidiary aspect, the laser marking system comprises a fibre laser incorporating a fibre for transmitting light on to an optical element for directing the light on to a reflector equipped with means for positioning said reflector in order to direct light on to a substrate to be marked.

### Brief Description of the Figures

Figure 1 shows an optical element positioning arrangement using two monolithic actuators.
Figure 2 shows the end section of an actuator used for driving a collimator.
Figures 3 a and 3b show a side elevation view and an essentially plan view of a further embodiment of the invention.
Figure 4 shows a further optical positioning system which is not part of the invention.
Figure 5 shows a system for displacing a collimator in two dimensions in a sectional view.
Figure 6 shows an 'arrangement using four square cross-section actuators in a further embodiment of the invention.
Figure 7 shows a further embodiment in a schematic plan view of a further embodiment of the invention using four square cross-section actuators.
Figures 8a and 8b show a schematic side elevation view of a mobile phone application in accordance with a further embodiment of the invention.
Figure 9 shows the circuitry used for driving the piezo scanner of the kind shown in figure 1.
Figure 10 shows a laser marking system in schematic form.
Figure 11 shows the end portion of an actuator in schematic form in conjunction with a diverging lens.
Figure 12 shows an end portion of an actuator with a converging lens.
Figure 13 shows a laser marking system in schematic form using a laser fibre and a mirror actuator.
Figure 14 shows in schematic form an actuator with a displaceable collimator system for directing light on to a substrate.
Figure 15 shows in schematic form two actuators of the kind presented in figure 1 arranged in series in a laser marking embodiment.

### Detailed Description of the Figures

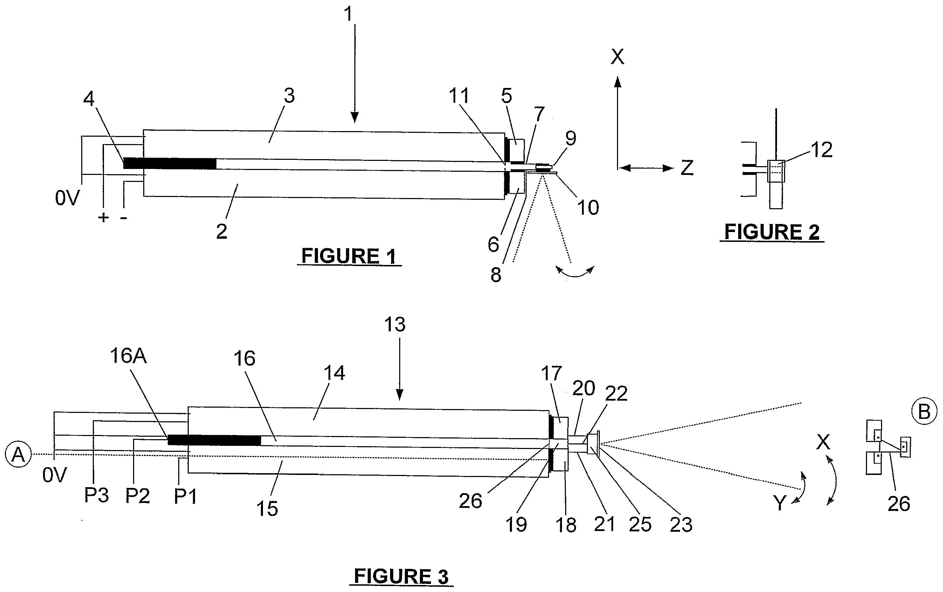

Figure 1 shows an optical element positioning arrangement generally referenced 1 comprising two monolithic actuators 2 and 3 extending essentially in the Z direction. The actuator shown is a piezoelectric actuator formed of conventional layers of electrodes and ceramic material.

Actuator 2 and 3 are fixed at one end to a mechanical mount 4. At the opposite end to the mechanical mount two mounting blocks 5 and 6 extend longitudinally outwards from the end of their respective piezoelectric actuators 2 and 3. Extending from the mounting blocks 5 and 6 are respectively flexures 7 and 8. Flexures 7 and 8 extend in parallel and join the respective mounting blocks 9 of a mirror 10. The reflective surface of the mirror is oriented downwards in the figure.

A stabilising flexure 11 is provided between the free extremities of actuators 2 and 3. The stabilising flexure is selected to have a short length of say, 0.25mm and to be extremely stiff in X and Y displacement but compliant in the operating direction - thus enabling spurious lower frequency resonance modes to be avoided. These spurious frequency resonance modes are also avoided by the balanced drive nature of the structure with its two actuators located parallel to one another, and the symmetric location of the mechanical mount 4.

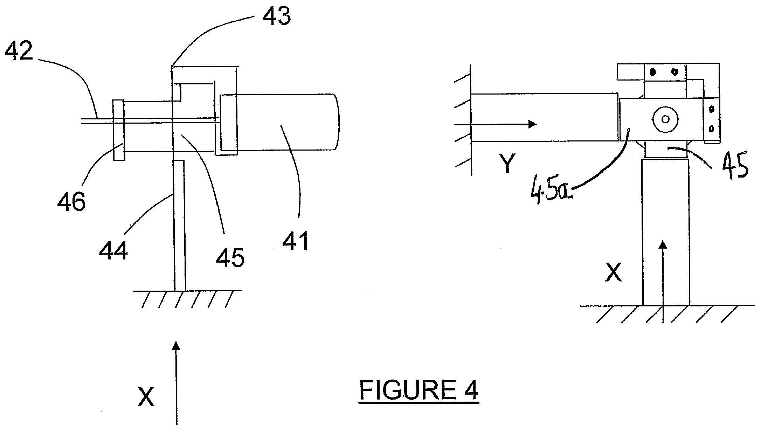

Figure 2 shows the end section of an actuator configuration of the kind shown in figure 1 where the mirror structure has been replaced by a rod-lens or collimator 12. In a similar fashion to the mirror of figure 1, the collimator is shown pointing downwards (like figure 4).

Both the structures of figure 1 and figure 2 use actuators which displace longitudinally in the Z direction. When actuator 3 is displaced relative to actuator 2 the mirror or collimator will tilt in the X direction. Due to the relative proximity of the line of actions of flexures 7 and 8, relatively small displacements of the actuators in their longitudinal direction result in important angular tilts in the X direction.

The two parallel mode 3 - 1 actuators of figures 1 and 2 may have an active length of 35mm and be of 2mm X 2mm cross-section. The actuators may be of multilayer co-fired soft ceramic with a layer thickness of 30 microns. Similarly, to the space between the flexures, the space between the actuators may be of 0.25mm. The stabilising flexure may be made from 20 microns thick and 1.2mm wide spin melt ribbon (for example Vacuumschmelze (German word for Vacuum melt) 6025).

The drive ends of the piezoactuators may be connected to the mirror backing plate via a parallel flexure pair of 20 microns spin melt ribbon which are themselves separated by 0.25mm. In order to minimise the distance of the mirror from the effective rotation point, the flexures are preferably short of less than, for example, 0.5mm and advantageously 0.3mm.

In this configuration, the free ends of the piezoelectric actuators may move +/- 15 microns relative to each other in response to a - 15 to + 90 Volts drive to the piezoelectric actuators. This results in an angular displacement of +/-0.06 radians, and an optical beam swing in reflection from the mirror of +/-0.12 radian.

The mirror may be of small dimensions and preferably of 1.5 by 1.5 mm and 0.13mm thick metalised glass. It is preferable for the mirror to be mounted parallel and overlapping with the flexures in order to minimise its inertia about its rotation point.

In this structure, preferably the first resonant frequency of the structure in its operating mode would be 28kHz, and can be mounted from the base where the two piezoelectric actuators join with very low coupling of vibration and noise due to the differential drive of the device.

As an alternative of the structure presented in figure 1, the mirror may be mounted above the flexure set or even, in part, between the flexures, if appropriate, for certain applications.

The invention also envisages the use of piezoelectric actuators of smaller cross-section, for example, 1mm x 1mm, if appropriate. Reducing the cross-section in this manner would allow lower electrical power consumption to be achieved and a higher average of operating velocity. In certain applications, the invention envisages the use of fans or other cooling means to allow the operating velocities to be increased for certain applications.

Figures 3a and 3b show two separate views of a further embodiment of the present invention. Optical element positioning arrangement 13 uses three piezoelectric actuators 14, 15 and 16 (being only partly visible in the figure), each of which are configured to be displaceable in the longitudinal Z direction. A mechanical mount 16A is used to retain the piezoelectric actuators at one end whilst at their free end, three mounting blocks, 17, 18 and 19 are provided to transmit motion from the end of the actuators to three flexure wires (which may be replaced by plates if appropriate) 20, 21 and 22. These three flexure wires serve to support a mirror or another optical element such as a collimator (or in this case to the actuators. Dependent upon the combination of motions applied to the various actuators, mirror 23 to which the flexures are joined will tilt in the 2-dimensions - i.e. in the X and Y directions as defined in the figure.

The actuators in figure 3 are essentially parallel to each other whilst being spaced by 0.25mm as in the configuration of figure 1. The flexure wires are located inwards from the central axis 24 of the actuators. The wires may be of steel with a diameter of 125 microns, 0.6mm long and spaced from each other by say 1mm. When viewing the wires in cross-sectional view as in figure 3b, the wires form the points of a 1mm side triangle.

The wires are attached to a mirror backing plate 25 which supports a mirror 23. The mirror may be of 3mm diameter. The swing of the optical beam that can be reflected off the mirror 23 may be of 60mrad or 3.5° in each X and Y directions with the first resident frequency being of 5kHz.

Preferably, a balanced drive in both X and Y directions may be used to avoid transmission of vibration from mounting at root: piezoelectric actuator 14's drive = X + Z/2, piezoelectric actuator 15's drive = - X + Y/2 and piezoelectric drive 16 = + Y.

The invention also envisages the use of stabilising flexures such as that referenced 26 forming a triangle between the various piezoelectric actuators.

Figure 4 shows a rod lens or collimator 41 from which extends a fibre 42. Collimator 41 is held in a receiver 43. The receiver 43 is actuated upon in the X direction by an actuator 44 coupled to a flexure plate 45. A second actuator referenced 46 displaces the collimator in Y directions. Actuator 46 is similarly linked to the receiver by flexure 45a acting as connecting means.

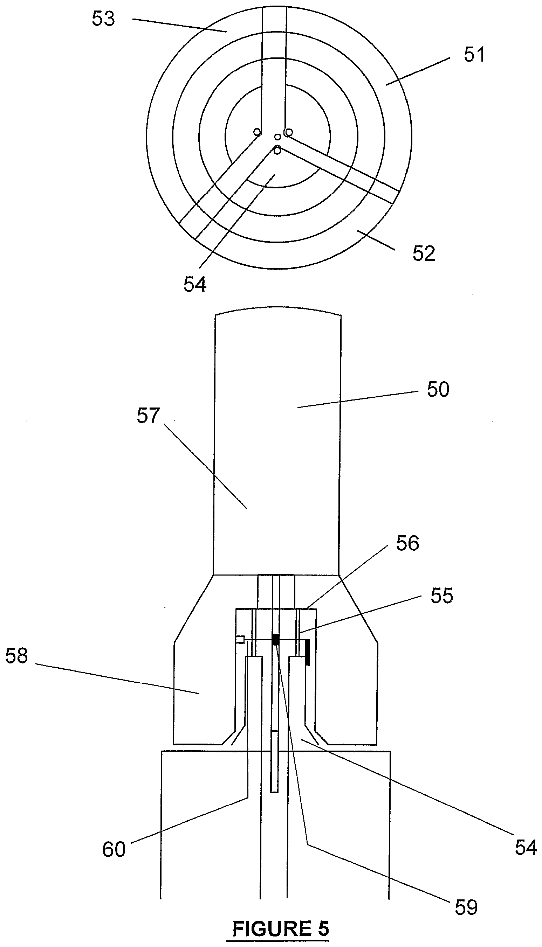

Figure 5 shows a system for displacing a collimator 50 in two dimensions. This system employs three piezoelectric actuators 51, 52 and 53 covering approximately a third each of the diameter of the actuator. Blocks such as that referenced 54 extend between individual piezoelectric actuators and flexure wires such as that referenced 55 which then engage an abutment 56 of the collimator unit. The collimator unit 50 has two parts, a collimator 57 and a counter weight portion 58 located immediately below the collimator. When a combination of the piezoelectric actuators are caused to extend the collimator will tilt about a centre of rotation referenced 59. A stabilising flexure may be provided between the top extremity of a block 54 and the collimator's counter weight. This latest arrangement has been referenced 60 in the figure. The counter weight portion of the collimator unit is preferably selected to be of dense material such as tungsten. Other materials will be selected by persons skilled in the art so that the volume of the counter weight is lower than the volume occupied by the collimator itself so that the flexures need not be of too great a length.

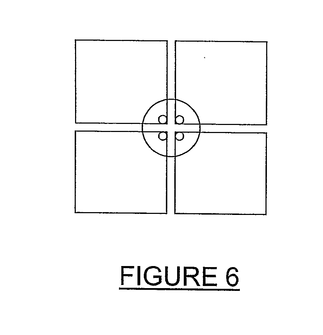

Figure 6 shows an arrangement using four square cross-section actuators which could be used with a collimator of the kind described with reference to figure 5. In this embodiment four separate flexure wires may be used between the actuators and the collimator unit.

In both figures 5 and 6, the flexure wires have advantageously been placed inwardly from the longitudinal central axes of each actuator so that greater angular tilt may be achieved when compared with the angular tilt achievable had the wires been located along the central axes. In other words, the configuration achieves ameliorated amplification of motion in the eccentric position selected.

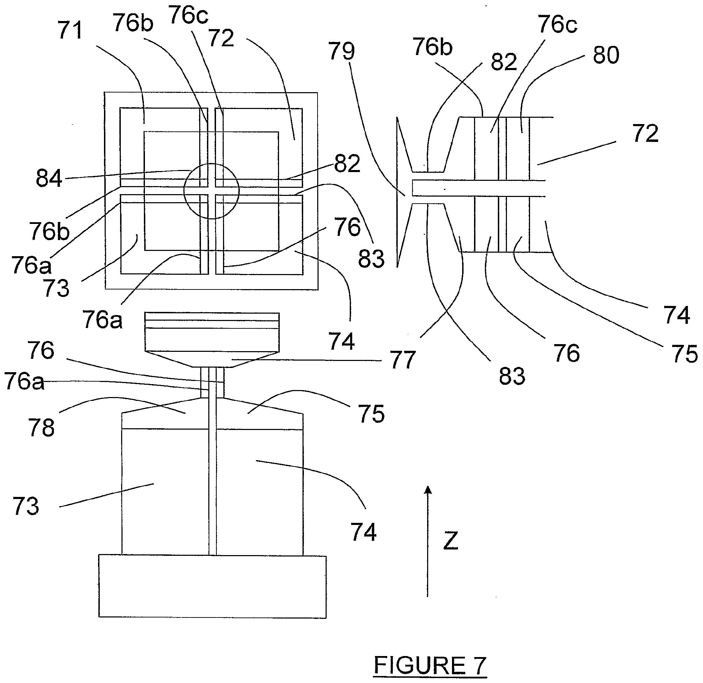

Figure 7 shows a further embodiment of the invention using four square cross-section actuators 71, 72, 73 and 74 which can be individually controlled to extend in the Z direction. Each piezoelectric actuator incorporates a trapezoidal block such as that referenced 75. Any displacement of actuator 74 causes block 75 to displace which itself displaces flexure 76 upwards. Flexure 76 and 76a join an intermediate supporting block 77. Any displacement of actuator 74 relative to actuator 73 causes block 77 to swing in the left/right direction. Displacements of actuator 73 also causes movement in the left/right directions as the actuator 73 lifts or lowers trapezoidal block 78 which is joined to mirror supporting block 77 via flexure 76a. Similarly Flexure 76b and 76c driven by actuators 71 and 72 join an intermediate supporting block 77a. Any displacement of actuator 71 relative to actuator 72 causes block 77a to swing in the left/right direction.

Common mode movement of actuators 71 / 72 causes block 77a to move up and down. Similarly common mode movement of actuators 73 /74 causes block 77 to move up and down. Thus differences in common mode movement between 71/72 and 73/74 cause mirror mount 79 to tip in an up down direction via flexures 82 and 83. In this way, two axes tilting of the mirror 84 is achieved using flat flexures, with better dynamic performance than the wire flexures described in figures 3 and 6 at the expense of a more complex structure.

This structure is particularly advantageous because it allows the flexures to be stiffer since each flexure is designed to be bent in only one plane.

This configuration keeps the flexure rotation point closer to the mirror plane which minimises the inertia of the system.

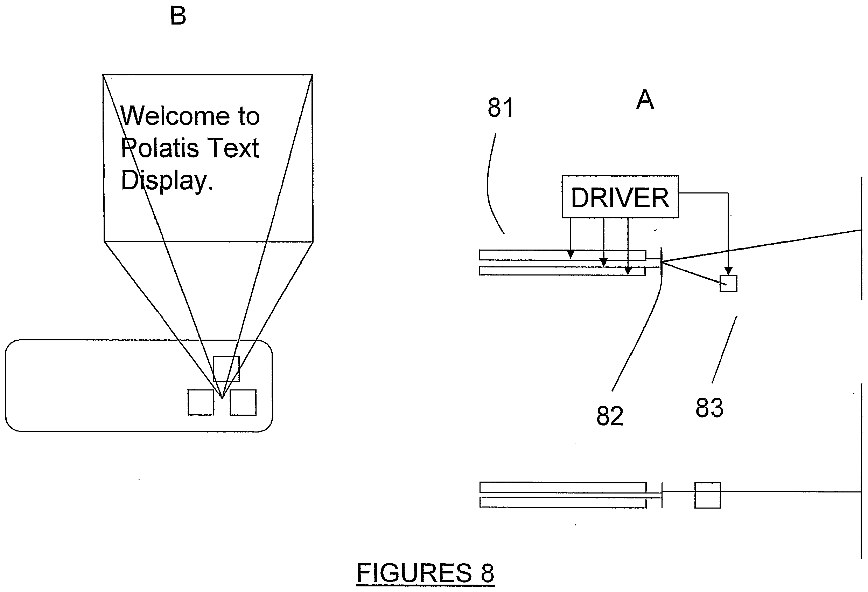

The scanners presented in figures 1 to 7 may be incorporated advantageously into a mobile phone. The structure of figure 3 is used in figures 8 and referenced 81. This structure may be driven to displace a mirror 82 in two dimensions. A red laser diode with a collimating lens, the assembly schematically represented in figures 8 and referenced 83 may be used to transmit wavelengths on to a mirror 82 for projection on to an appropriate display for say text messages and downloadable vector displays, static or animated. Figure 8b is an example of a text display. It is thought that this configuration may have particular applications in displaying map information onto reduced-size screens.

This system may be coupled with, for example, a pair of solid state gyros or even three gyros to compensate for picture rotation so as to allow the system to be used for a scrolling map display incorporating simple inertial sensors in the phone. This would allow, for example, the system to illuminate different portions of the picture/map as a user points in different directions.

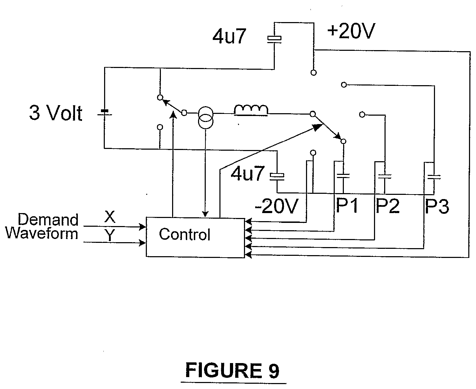

Figure 9 shows the circuitry necessary in a high efficiency power supply for driving the piezo scanner of the kind shown in figure 1 which may be particularly useful for mobile phone applications.

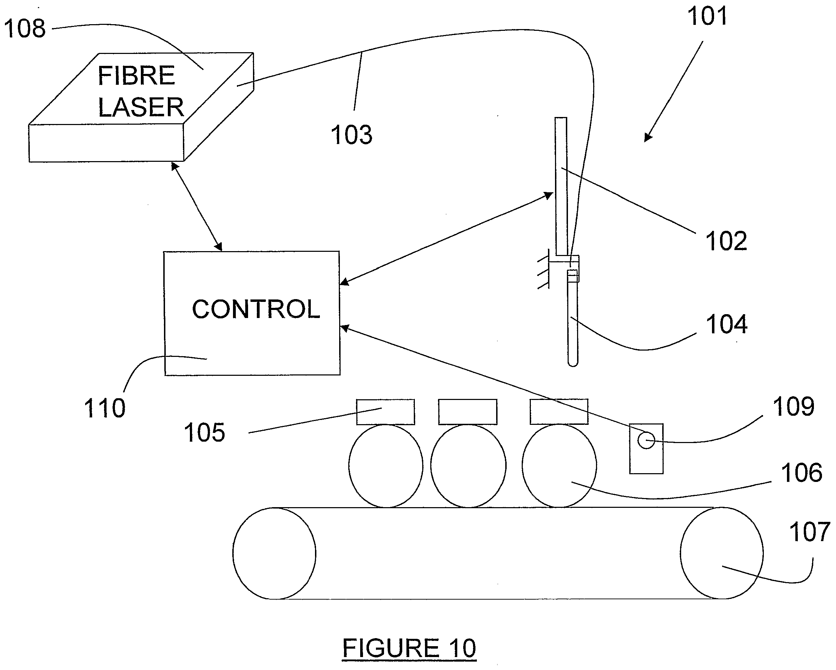

Figure 10 shows a laser marking system generally referenced 101. Using an actuator 102 which may be of the kind described in international patent application published as WO03/104872. The actuator 102 steers a rod lens 104 to direct light onto a substrate such as that referenced 105 for marking. In this embodiment, the substrate may be the lid of a product such as that referenced 106 which is displaced along an industrial production line by a conveyor belt 107. A fibre laser block 108 may be used to emit light from a laser to an optical fibre 103 which is bonded to the rod lens 104. An optical beam trigger 109 is envisaged and placed in close proximity to any travelling produce so that, when the product approaches the marking position, appropriate marking is triggered. A control unit 110 is provided to synchronise the marking. The invention envisages the use of a vector graphics driven alpha numeric font corrected for both the dynamics of the scanner and the movement of the product past the scan head. It is envisaged to supply the system with means to allow it to turn off the laser in order to separate characters and lines as appropriate.

The control system also envisages varying the scan speed to provide the gaps in the marking which may avoid having to modulate the laser. In this mode of function, the actuator may be set to scan faster in the gaps.

The invention also envisages the use of a camera linked to the system's control unit to monitor marking performance by imaging finished text and adjusting parameters to keep variables such as text contrast and line width within prescribed limits. The camera may also be configured to trigger alerts for service to take place if the system runs out of margin. The camera may be used to link the marking system to measure marking distance and automatically adjust scan size and speed (or beam power) to compensate for any unwanted levels of marking. It is also envisaged that a photo detector may be used to monitor the marking. The photo detector may, for example, monitor the smoke or combustion generated at the marking point or, for example, the reflectivity/colour of the mark immediately behind the marking point. If the light detected by the photo detector is outside of pre-determined values, the control system may modify the beam power in real time, i.e. during the marking process itself to ensure consistent marking. One method of monitoring at the marking point can be achieved by tapping off reflected light from the fibre power feed. It is also envisaged to use a wavelength dependent coupler to separate out combustion light from beam power.

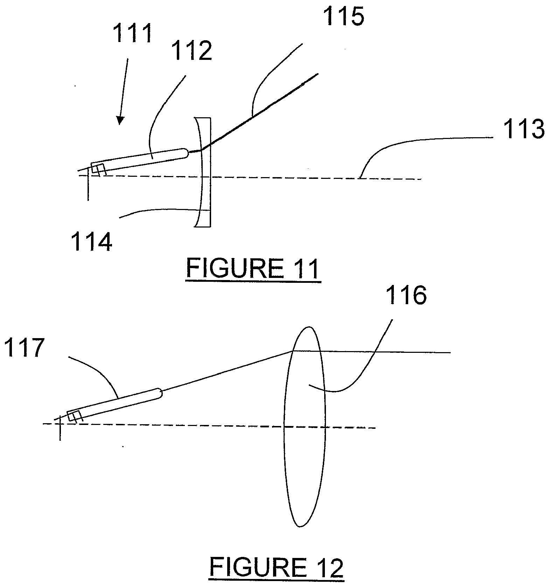

In order to improve the versatility of the actuator system of figure 10, further improvements to the present laser marking system are introduced in figures 11 and 12.

Figure 11 shows the end portion of an actuator 111 with its corresponding collimator 112 in a tilted position from its rest operating line 113. A diverging lens 114 is provided in front of the collimator 112 which increases the deflection as line 115 shows. This configuration is particularly advantageous in order to increase the number of resolvable pixels in a particular scan field.

Figure 12 places a converging lens 116 at a distance from collimator 117 in order to create a parallel scanned beam such that the font size is independent of target distance.

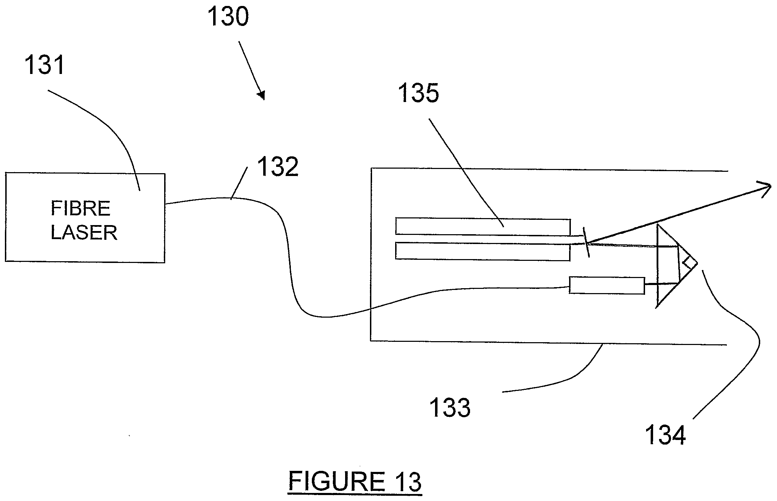

Figure 13 shows a further embodiment of a laser marking system generally referenced 130 in which a fibre laser 131 emits light into a fibre 132 and outputs light via a collimator 133 onto a prism 134 which reflects light back on to a mirror scanner 135 of the kind shown in figure 3. The light reflected by the mirror scanner is directed on to any appropriate item. One of the advantages of this is to preserve the small and skinny aspect of the collimator based actuator of Polatis previous patent applications and the advantages of the thin and flexible delivery from the fibre laser, with the high speed compact mirror scanner as per for example figure 3.

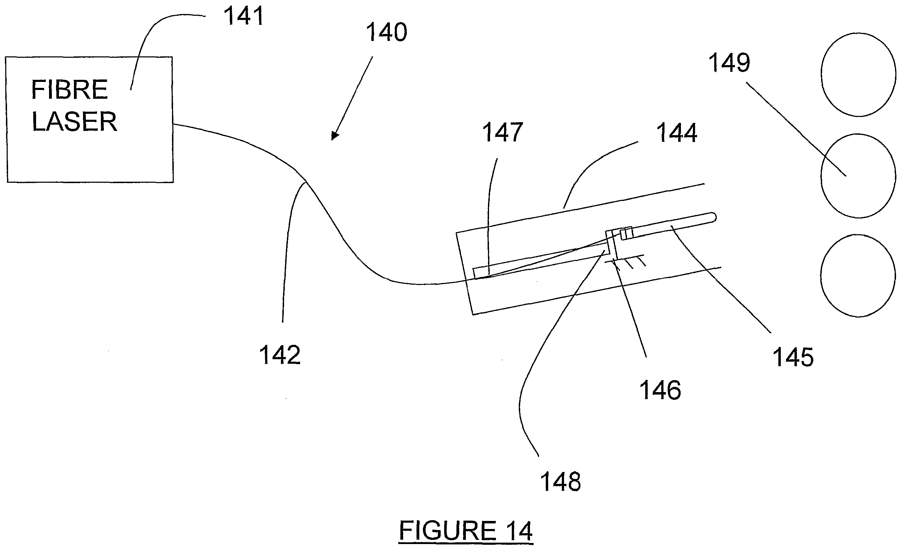

Figure 14 shows a further embodiment of a laser marking system generally referenced 140 using a fibre laser 141 for emitting the laser light via a fibre 142 to an actuator unit 143. The actuator unit has a housing member 144 in which is located, at the end of the fibre, a collimator 145. The collimator is held in a so-called double-gimbal structure such as that described in detail in international patent application published as WO03/104872. The double-gimbal mount is attached to the housing 144 via a first flexure 146 and to a 2-dimensional piezoelectric actuator 147 via a flexure 148.

The beam emitted via the collimator is thus directed on to items to be marked such as that referenced 149 in the figure.

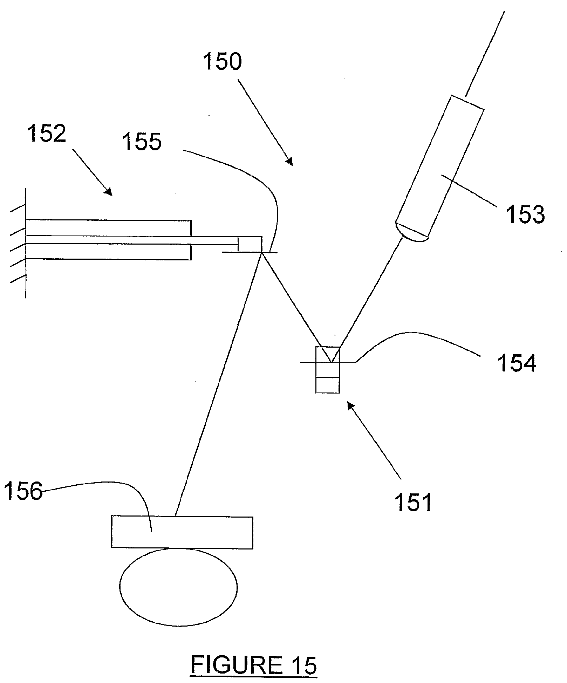

Figure 15 shows a further laser marking system 150 using two one dimensional actuators of the kind shown in figure 1, referenced 151 and 152. In use, a beam is emitted from collimator 153 on the mirror 154 of actuator 151 and then onto the mirror 155 of actuator 152; one actuator being at 90 degrees from the other. The beam is then directed onto produce 156 for laser marking.

## Claims

1. An optical element positioning arrangement (1, 13), comprising an optical element (10, 23, 50), at least two monolithic actuators (2, 3, 14, 15, 16, 51, 52, 53) acting in the Z direction; a first flexure (7, 20, 21, 55) located between a free end of a first actuator and said optical element; said first flexure being the only flexure between said free end of said first actuator and said optical element; a second flexure (8, 22) located between a free end of a second actuator and said optical element; said second flexure being the only flexure between said free end of said second actuator and said optical element; the arrangement being configured so that when a first actuator is actuated any displacement generated is transmitted via said first flexure to said optical element and provided that a second actuator's displacement differs from the displacement of the first, the optical element is caused to swing; wherein the actuators are substantially parallel to one another and extending in the Z direction; wherein both actuators are fixed to a mechanical mount (4, 16A) at their respective ends distal to their free ends, the mechanical mount (4, 16A) spacing said actuators and located between said actuators along at least a portion of their respective ends distal to their free ends, wherein said first and second flexures extend in parallel with the longitudinal Z-axis of their respective actuators and are disposed inwardly from the central axis of the actuators so as to be proximate one another and thus impart a greater degree of swing to the optical element.

2. An optical element positioning arrangement according to claim 1, **characterised in that** the actuators (14, 15, 16) are of rectangular cross-section.

3. An optical element positioning arrangement according to any of the preceding claims, wherein said actuators (2, 3, 14, 15, 16, 51, 52, 53) incorporate mounting blocks (5, 6, 17, 18, 19, 54) for mounting said flexure onto its corresponding actuator.

4. An optical element positioning arrangement according to any of the preceding claims, further comprising a stabilising flexure (11, 26) between the free ends of said actuators (2, 3).

5. An optical element positioning arrangement according to any of the preceding claims, wherein said optical element is a mirror (23) which is mounted parallel and overlapping with said flexures.

6. An optical element positioning arrangement according to claim 1, comprising three piezoelectric actuators (14, 15, 16, 51, 52, 53), each of which are configured to be displaceable in the longitudinal Z direction.

7. An optical element positioning arrangement according to claim 6, wherein said flexures are wires (20, 21, 22).

8. An optical element positioning arrangement according to either claim 6 or 7, wherein stabilising flexures (26) are provided forming a triangle between the piezoelectric actuators.

9. An optical element positioning arrangement according to any of claims 6 to 8, wherein said optical element is a collimator unit (50) with a collimator part (57) and a counter weight portion (58) located immediately below the collimator.

## Patentansprüche

1. Anordnung zur Positionierung von optischen Elementen (1, 13), umfassend ein optisches Element (10, 23, 50), mindestens zwei monolithische Aktuatoren (2, 3, 14, 15, 16, 51, 52, 53), die in der Z-Richtung wirken; eine erste Biegung (7, 20, 21, 55), die zwischen einem freien Ende eines ersten Aktuators und dem optischen Element angeordnet ist; wobei die erste Biegung die einzige Biegung zwischen dem freien Ende des ersten Aktuators und dem optischen Element ist; eine zweite Biegung (8, 22), die zwischen einem freien Ende eines zweiten Aktuators und dem optischen Element angeordnet ist; wobei die zweite Biegung die einzige Biegung zwischen dem freien Ende des zweiten Aktuators und dem optischen Element ist; wobei die Anordnung so konfiguriert ist, dass, wenn ein erster Aktuator betätigt wird, jede erzeugte Verschiebung über die erste Biegung auf das optische Element übertragen wird, und vorausgesetzt, dass die Verschiebung eines zweiten AKTUATORs sich von der Verschiebung des ersten unterscheidet, das optische Element zum Schwingen veranlasst wird; wobei die Aktuatoren im Wesentlichen parallel zueinander sind und sich in Längsrichtung Z erstrecken; wobei beide Aktuatoren an einer mechanischen Halterung (4, 16A) an ihren jeweiligen Enden distal zu ihren freien Enden befestigt sind, wobei die mechanische Halterung (4, 16A) die Aktuatoren beabstandet und zwischen den Aktuatoren entlang mindestens eines Abschnitts ihrer jeweiligen Enden distal zu ihren freien Enden angeordnet ist, wobei sich die ersten und zweiten Biegungen parallel zu der Z-Längsachse ihrer jeweiligen Aktuatoren erstrecken und von der Mittelachse der Aktuatoren nach innen angeordnet sind, um einander nahe zu sein und somit dem optischen Element ein größeres Maß an Schwingen zu verleihen.

2. Anordnung zur Positionierung von optischen Elementen nach Anspruch 1, **dadurch gekennzeichnet, dass** die Aktuatoren (14, 15, 16) einen rechteckigen Querschnitt aufweisen.

3. Anordnung zur Positionierung von optischen Elementen nach einem der vorhergehenden Ansprüche, wobei die Aktuatoren (2, 3, 14, 15, 16, 51, 52, 53) Montageblöcke (5, 6, 17, 18, 19, 54) zur Befestigung der Biegung an ihrem entsprechenden Aktuator aufweisen.

4. Anordnung zur Positionierung von optischen Elementen nach einem der vorhergehenden Ansprüche, ferner mit einer stabilisierenden Biegung (11, 26) zwischen den freien Enden der Aktuatoren (2, 3).

5. Anordnung zur Positionierung von optischen Elementen nach einem der vorhergehenden Ansprüche, wobei das optische Element ein Spiegel (23) ist, der parallel und überlappend zu den Biegungen montiert ist.

6. Anordnung zur Positionierung von optischen Elementen nach Anspruch 1, umfassend drei piezoelektrische Aktuatoren (14, 15, 16, 51, 52, 53), die jeweils in Längsrichtung Z verschiebbar ausgebildet sind.

7. Anordnung zur von optischen Elementen nach Anspruch 6, wobei die Biegungen Drähte (20, 21, 22) sind.

8. Anordnung zur Positionierung von optischen Elementen nach einem der Ansprüche 6 oder 7, wobei stabilisierende Biegungen (26) vorgesehen sind, die ein Dreieck zwischen den piezoelektrischen Aktuatoren bilden.

9. Anordnung zur Positionierung von optischen Elementen nach einem der Ansprüche 6 bis 8, wobei das optische Element eine Kollimatoreinheit (50) mit einem Kollimatorteil (57) und einem Gegengewichtsteil (58) ist, das sich unmittelbar unter dem Kollimator befindet.

## Revendications

1. Agencement de positionnement d'éléments optiques (1, 13), comprenant un élément optique (10, 23, 50), au moins deux actionneurs monolithiques (2, 3, 14, 15, 16, 51, 52, 53) agissant dans la direction Z ; une première flexion (7, 20, 21, 55) située entre une extrémité libre d'un premier actionneur et ledit élément optique ; ladite première flexion étant la seule flexion entre ladite extrémité libre dudit premier actionneur et ledit élément optique ; une seconde flexion (8, 22) située entre une extrémité libre d'un second actionneur et ledit élément optique ; ladite seconde flexion étant la seule flexion entre ladite extrémité libre dudit second actionneur et ledit élément optique ; l'agencement étant configuré de sorte que lorsqu'un premier actionneur est actionné, tout déplacement généré est transmis par l'intermédiaire de ladite première flexion audit élément optique et, à condition que le déplacement d'un second actionneur diffère du déplacement du premier, l'élément optique est amené à osciller ; dans lequel les actionneurs sont sensiblement parallèles l'un à l'autre et s'étendent dans la direction Z ; dans lequel les deux actionneurs sont fixés à une monture mécanique (4, 16A) à leurs extrémités respectives distales par rapport à leurs extrémités libres, la monture mécanique (4, 16A) espaçant lesdits actionneurs et située entre lesdits actionneurs le long d'au moins une partie de leurs extrémités respectives distales par rapport à leurs extrémités libres, dans lequel lesdites première et seconde flexions s'étendent parallèlement à l'axe Z longitudinal de leurs actionneurs respectifs et sont disposées vers l'intérieur à partir de l'axe central des actionneurs de façon à être proches l'une de l'autre et à conférer ainsi un plus grand degré d'oscillation à l'élément optique.

2. Agencement de positionnement d'éléments optiques selon la revendication 1, **caractérisé en ce que** les actionneurs (14, 15, 16) sont de section transversale rectangulaire.

3. Agencement de positionnement d'éléments optiques selon l'une quelconque des revendications précédentes, dans lequel lesdits actionneurs (2, 3, 14, 15, 16, 51, 52, 53) comportent des blocs de montage (5, 6, 17, 18, 19, 54) pour monter ladite flexion sur son actionneur correspondant.

4. Agencement de positionnement d'éléments optiques selon l'une quelconque des revendications précédentes, comprenant en outre une flexion de stabilisation (11, 26) entre les extrémités libres desdits actionneurs (2, 3).

5. Agencement de positionnement d'éléments optiques selon l'une quelconque des revendications précédentes, dans lequel ledit élément optique est un miroir (23) qui est monté parallèlement et en recouvrement avec lesdites flexions.

6. Agencement de positionnement d'éléments optiques selon la revendication 1, comprenant trois actionneurs piézoélectriques (14, 15, 16, 51, 52, 53), chacun étant configuré pour être déplaçable dans la direction longitudinale Z

7. Agencement de positionnement d'éléments optiques selon la revendication 6, dans lequel lesdites flexions sont des fils (20, 21, 22).

8. Agencement de positionnement d'éléments optiques selon l'une ou l'autre des revendications 6 ou 7, dans lequel des flexions de stabilisation (26) sont prévues formant un triangle entre les actionneurs piézoélectriques.

9. Agencement de positionnement d'éléments optiques selon l'une quelconque des revendications 6 à 8, dans lequel ledit élément optique est une unité de collimateur (50) avec une partie collimateur (57) et une partie contrepoids (58) située immédiatement sous le collimateur.
